# EUROPÄISCHE PATENTSCHRIFT

(11) **EP 2 412 226 B1**
(45) Veröffentlichungstag und Bekanntmachung des Hinweises auf die Patenterteilung: **08.07.2015**
(21) Anmeldenummer: 11165965.2
(22) Anmeldetag: 13.05.2011
(51) Int. Cl.: A01D 41/12, B62D 55/104, B62D 55/116

(54) **Selbstfahrende Erntemaschine**
Self-propelled harvester
Moissonneuse automobile

(30) Priorität: 30.07.2010 DE 102010036756
(43) Veröffentlichungstag der Anmeldung: 01.02.2012
(73) Patentinhaber: CLAAS Selbstfahrende Erntemaschinen GmbH, 33428 Harsewinkel (DE)
(72) Erfinder: Behra, Jan Philipp, 33332, Gütersloh (DE); Hermeler, Heinrich, 48291, Telgte (DE); Speckamp, Dirk, 59073, Hamm (DE)

(56) Entgegenhaltungen:
- WO-A1-2006/018215
- DE-A1- 19 919 959
- DE-A1-102005 046 553

## Beschreibung

Die Erfindung betrifft eine selbstfahrende Erntemaschine gemäß dem Oberbegriff des Patentanspruches 1 (siehe WO-A-2006/018215).

Aus der DE 10 2005 046 553 A1 ist ein Raupenlaufwerk der eingangs genannte Art bekannt, das ein Dämpfungssystem aufweist, um Schwingungen im Raupenlaufwerk, die bei einem Überfahren eines unebenen Bodens hervorgerufen werden, zu unterdrücken beziehungsweise um ein rasches Abklingen der Schwingungen zu erreichen.

Der Erfindung liegt die Aufgabe zu Grunde, eine selbstfahrende Erntemaschine der eingangs genannten Art bereitzustellen, die bei unterschiedlichen Betriebszuständen flexibel auf Ungleichmäßigkeiten des Bodens, auf dem sich die Erntemaschine bewegt, reagieren kann.

Diese Aufgabe wird durch die im Patentanspruch 1 genannten kennzeichnenden Merkmale gelöst.

Weitere vorteilhafte Ausführungen des Erfindungsgegenstandes ergeben sich aus den nachgeordneten Unteransprüchen.

Gemäß Anspruch 1 wird vorgeschlagen, dass das Höhenniveau der Erntemaschine durch eine Variation des Federweges des hydropneumatisch ausgeführten Dämpfungssystems des Raupenlaufwerkes veränderbar ist. Die dadurch erreichbare Veränderung des Höhenniveaus der Erntemaschine ermöglicht in einfacher Weise den Ausgleich von Bodenunebenheiten, um die Erntemaschine bei unterschiedlichen Betriebszuständen in der für den Betrieb geeignetsten Position zu halten, wie zum Beispiel im Betriebszustand der Erntefahrt, bei dem Passieren von durch Zäune oder dergleichen seitlich begrenzten Wegstrecken, deren Durchfahrtsbreite geringer ist, als die des an der Erntemaschine befindlichen Vorsatzgerätes, oder der Aufnahme oder Ablage des Vorsatzgerätes.

Vorzugsweise kann der Federweg der an der Achse angeordneten Raupen unabhängig voneinander veränderbar sein. Hierdurch lassen sich in vorteilhafter Weise auftretende Neigungen quer zur Längsachse der Erntemaschine, wie sie im Betriebszustand der Erntefahrt am Hang auftreten, ausgleichen. Des Weiteren können durch eine permanent aktive Variation des Federweges während der Fahrt der Erntemaschine etwaige in die Erntemaschine eingeleitete Schwingungen kompensiert werden. Dies ist insbesondere bei Schneidwerken mit großer Breite von Bedeutung, deren Eigengewicht zu einer ungewollten schwingungstechnischen Anregung der Erntemaschine um deren Längsachse bei einer Fahrt über einen unebenen Boden führen kann.

Insbesondere kann eine an der Erntemaschine vorgesehene Sensorik sowie eine Regel- und Steuereinrichtung eine Neigung derselben in Bezug auf den Untergrund erfassen und in Abhängigkeit von der Neigung der Erntemaschine den Federweg der Raupen durch eine Ansteuerung von Aktoren variieren. Mit Hilfe der Sensorik und der Regel- und Steuereinrichtung kann die Längs- und/oder Querneigung der Erntemaschine erfasst und ausgewertet werden, um durch die Variation des Federweges der Raupen einen Neigungsausgleich der Erntemaschine während der verschiedenen Betriebszustände zu ermöglichen.

Vorteilhafterweise kann das hydropneumatisch gefederte Raupenlaufwerk in Abhängigkeit von einem Betriebszustand der Erntemaschine in eine äußere Endlage überführbar sein. Als äußere Endlage des Raupenlaufwerkes wird die Position des Raupenlaufwerkes bezeichnet, die erreichbar ist, wenn der gesamte zur Verfügung stehende Federweg des hydropneumatisch gefederten Raupenlaufwerkes verwendet wird, um das Raupenlaufwerk anzuheben beziehungsweise abzusenken.

In bevorzugter Weiterbildung kann in einem Betriebszustand, in dem sich die Erntemaschine in einer Aufnahme- oder Ablageposition befindet, in der das Vorsatzgerät durch die Aufnahmevorrichtung aufnehmbar oder ablegbar ist, das Raupenlaufwerk in eine äußere Endlage überführt sein. Der Betriebszustand ist eine Aufnahme- oder Ablageposition der Erntemaschine, in der das Vorsatzgerät durch die Aufnahmevorrichtung aufnehmbar oder ablegbar ist. Der Betriebszustand der Aufnahme- oder Ablageposition charakterisiert den Zeitraum, in dem ein Vorsatzgerät von der Erntemaschine aufgenommen beziehungsweise abgelegt werden soll, wozu auch die Ausrichtung der Erntemaschine zur Aufnahme beziehungsweise Ablage in Bezug auf das Vorsatzgerät oder ein das Vorsatzgerät tragendes beziehungsweise aufnehmendes Fahrgestell zählt. In beiden Positionen, in denen sich das Raupenlaufwerk in einer äußeren Endlage befindet, ist es vorteilhaft, dass bei einem Aufnehmen oder Ablegen eines Vorsatzgerätes von einem beziehungsweise auf ein das Vorsatzgerät tragendes beziehungsweise aufnehmendes Fahrgestell, wie einem Schneidwerkswagen, welches auf unebenem Gelände steht, die daraus resultierende Beschränkung des Aushubbereiches ausgeglichen werden kann. Der beschränkte Aushubbereich, der sich aus dem zur Verfügung stehenden Verschwenkweg der Aufnahmevorrichtung ergibt, wird bei der Ablage beziehungsweise bei der Aufnahme des Vorsatzgerätes auf Grund einer stärkeren Einfederung der Erntemaschine durch die an der Aufnahmevorrichtung befindlichen zusätzlichen Last in Gestalt des Vorsatzgerätes zusätzlich beschränkt. Um auch diese Beschränkung ausgleichen zu können, wird mit dem Erreichen der Endposition der Aufnahmevorrichtung das Raupenlaufwerk um den Federweg angehoben, also in eine äußere Endlage überführt, wodurch eine zusätzliche Anhebung der Aufnahmevorrichtung erreicht und damit eine zusätzliche Aushubhöhe zur Verfügung gestellt wird. Auf diese Weise wird das Ausheben aus beziehungsweise das Ablegen auf das Fahrgestell des Vorsatzgerätes vereinfacht. Zudem hat dies den Vorteil, dass eine bestehende Aufnahmevorrichtung keine Modifikation erfahren muss, um eine zusätzliche Aushubhöhe zur Aufnahme oder Ablage, insbesondere auf unebenem Boden, zu erreichen. Umgekehrt ermöglicht das Absenken des Raupenlaufwerkes um den zur Verfügung stehenden Federweg eine Vereinfachung der Aufnahme des unmittelbar auf dem Boden liegenden Schneidwerkes. Das Absenken der Aufnahmevorrichtung bis zu einem minimalen Bodenabstand kann dazu führen, dass das Vorsatzgerät nicht in der Weise erfassbar ist, dass es an die Aufnahmevorrichtung ankoppelbar ist, da der Winkel der Aufnahmevorrichtung bezogen auf das Vorsatzgerät zu steil ist. Stattdessen wird es bei dem Versuch der Aufnahme von der Erntemaschine vor sich hergeschoben, was ein erneutes Anfahren zur Aufnahme des Vorsatzgerätes notwendig werden lässt. Durch die Möglichkeit des Absenkens des Raupenlaufwerkes ist das Absenken der Aufnahmevorrichtung in der Weise möglich, dass auf Grund des auf die Hinterachse der Erntemaschine verlagerten Drehpunktes der sich zwischen der Aufnahmevorrichtung und dem Vorsatzgerät einstellende Winkel weniger steil ist, wodurch die Aufnahme vom Boden vereinfacht wird.

Dazu kann ein Verfahren des Raupenlaufwerkes in die äußere Endlage durch eine an der Erntemaschine angeordnete Betätigungseinrichtung automatisch oder manuell initiierbar sein. Die Betätigungseinrichtung kann mit dem Eintreten eines entsprechenden Betriebszustandes, in der Aufnahme- oder Ablageposition der Erntemaschine, aktivierbar sein.

Hierzu kann vorgesehen sein, dass die Betätigungseinrichtung bei Erreichen einer Endposition der Aufnahmevorrichtung eine Aktorik ansteuert, die das Raupenfahrwerk automatisch in dessen äußere Endlage überführt. Dies ist nicht nur bei dem Vorgang des Aufnehmens und Ablegens des Vorsatzgerätes von Vorteil sondern auch bei einem Passieren von Hindernissen, wenn das Vorsatzgerät an der Erntemaschine befindlich ist, beispielsweise wenn die Erntemaschine zwischen zwei durch Zäune oder dergleichen getrennte Schläge hin- und herwechselt und der Durchfahrtbereich zwischen den Zäunen schmaler ist, als die Breite des Vorsatzgerätes.

Alternativ kann durch eine manuelle Bedienung der Betätigungseinrichtung bei Erreichen einer Endposition der Aufnahmevorrichtung das Raupenfahrwerk in die äußere Endlage überführbar sein. Bei dieser Ausführung obliegt es einer Bedienperson durch die Bedienung der Betätigungseinrichtung die Aktorik zu aktivieren, die das Raupenlaufwerk in die äußere Endlage überführt, nachdem die Aufnahmevorrichtung ihre Endposition erreicht hat.

Die Erfindung wird nachstehend an einem Ausführungsbeispiel näher erläutert.

In den zugehörigen Zeichnungen zeigen:
- Fig. 1: eine schematische Darstellung eines Mähdreschers mit Raupenlaufwerk in Seitenansicht;
- Fig. 2.: eine schematische Darstellung des Mähdreschers gemäß Fig. 1, mit in eine äußere Endlage überführtem Raupenlaufwerk.

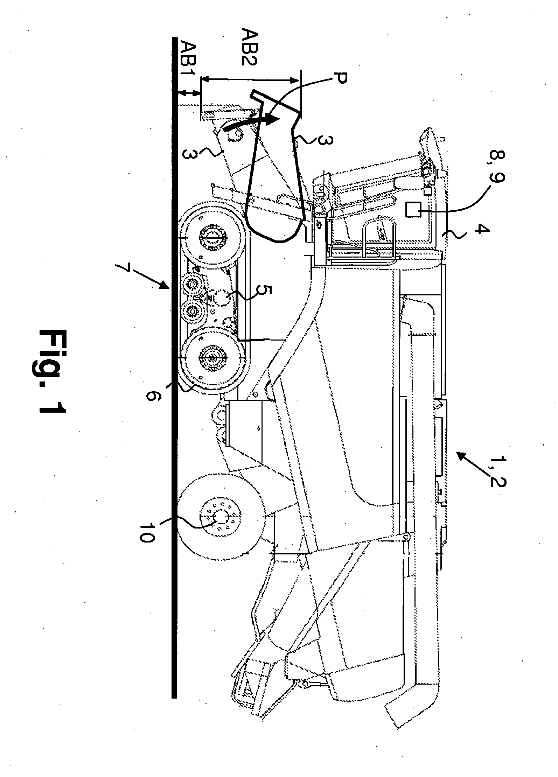

In Fig. 1 ist eine selbstfahrende Erntemaschine 1, insbesondere ein Mähdrescher 2, mit einer Aufnahmevorrichtung 3 zur Aufnahme eines nicht dargestelltes Vorsatzgerätes, wie ein Schneidwerk, einer oberhalb der Aufnahmevorrichtung 3 angeordneten Kabine 4 sowie mit zumindest einem von an einer Vorderachse 5 des Mähdreschers 2 beidseitig angeordneten, hydropneumatisch gefederten Raupen 6 gebildeten Raupenfahrwerk 7.

Wie in Fig. 1 angedeutet, lässt sich die Aufnahmevorrichtung 3 aus einer ersten Position, in der sich die die Aufnahmevorrichtung 3 in einer Arbeitsposition befindet und einen während des Betriebes eines an der Aufnahmevorrichtung 3 angebrachten Vorsatzgerätes veränderbaren ersten vertikalen Abstand AB1 zum Boden aufweist, in Pfeilrichtung P in eine zweite Position verschwenken, in der sich die Aufnahmevorrichtung 3 in einer Aufnahme- oder Ablageposition des Vorsatzgerätes befindet und einen maximalen vertikalen Abstand AB2 zum Boden aufweist. Das Verschwenken der Aufnahmevorrichtung 3 wird vorzugsweise durch Hydraulikzylinder bewirkt, die sich einerseits am Rahmen des Mähdreschers 2 sowie auf der Unterseite der Aufnahmevorrichtung 3 abstützen, um dessen Position in vertikaler Richtung verändern zu können. Wie weiterhin aus der Darstellung in Fig. 1 ersichtlich ist, ist der Verschwenkweg der Aufnahmevorrichtung 3 in vertikaler Richtung durch die Kabine 4 beschränkt. Dies kann insbesondere bei Unebenheiten des Bodens bei der Aufnahme- oder Ablage des Vorsatzgerätes von einem das Vorsatzgerät tragenden beziehungsweise aufnehmenden Fahrgestell, wie einem Schneidwerkswagen, den Vorgang der Aufnahme- oder Ablage des Vorsatzgerätes erschweren, da die Aushubhöhe limitiert ist und der Mähdrescher 2 zudem durch die zusätzliche Last des Vorsatzgerätes einfedert, was die Aushubhöhe zusätzlich verringert.

Um eine bauliche Modifikation der Aufnahmevorrichtung 3 beziehungsweise der den Verschwenkweg begrenzenden Kabine 4 zu vermeiden, aber dennoch eine Vergrößerung der Aushubhöhe zu erreichen, wird erfindungsgemäß vorgeschlagen, dass das Höhenniveau des Mähdreschers 2 durch eine Variation des Federweges des hydropneumatisch gefederten Raupenlaufwerkes 7 veränderbar ist.

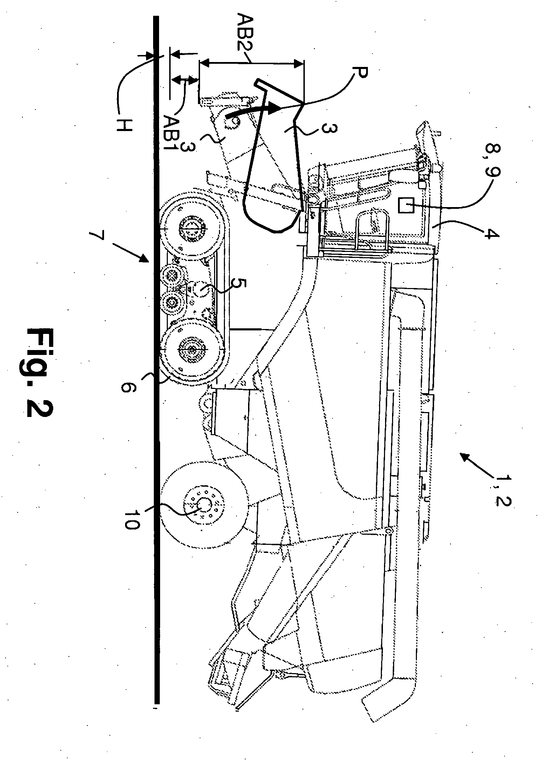

In Fig. 2 ist der Mähdrescher gemäß Fig. 1 dargstellt, bei dem das Raupenlaufwerk 7 in eine äußere Endlage überführt ist. Als äußere Endlage des Raupenlaufwerkes 7 ist die Position des Raupenlaufwerkes 7 bezeichnet, die erreichbar ist, wenn der gesamte zur Verfügung stehende Federweg der hydropneumatischen Federung verwendet wird, um das Raupenlaufwerk 7 anzuheben beziehungsweise abzusenken. Dabei wird der Mähdrescher 2 um einen von der Hinterachse 10 gebildeten Drehpunkt verschwenkt, so dass sich zwischen der Aufnahmevorrichtung 3 und dem Boden ein zusätzlicher Abstand H einstellt, um den sich der erste vertikale Abstand AB1 beziehungsweise der maximale vertikale Abstand AB2 erhöhen. Der Aushubbereich der Aufnahmeeinrichtung 3 erhöht sich somit um den zusätzlichen Abstand H, wodurch die Aufnahme beziehungsweise Ablage eines Vorsatzgerätes vereinfacht wird.

Das Verschwenken um die Hinterachse 10 durch das Anheben oder Absenken des Raupenlaufwerkes 7 ermöglicht es insbesondere bei einer Aufnahme eines auf dem Boden liegenden Vorsatzgerätes einen Winkel zwischen der Vorderseite der Aufnahmeeinrichtung 3, an der das Vorsatzgerät angeschlossen wird, und dem auf dem Boden liegenden Vorsatzgerät einzustellen, der dessen Aufnahme vereinfacht, da dieser weniger steil ist, als ohne die Regelung des Höhenniveaus des Raupenlaufwerkes 7.

Um das Raupenlaufwerk 7 zum Zwecke der Aufnahme oder Ablage des Vorsatzgerätes in seine äußere Endlage zu überführen, ist eine Betätigungseinrichtung 8 vorgesehen, die vorzugsweise in der Kabine 4 angeordnet ist, und von einer Bedienperson betätigbar ist. Als Betätigungseinrichtung 8 kommt beispielsweise eine üblicherweise bereits in Mähdreschern 2 vorgesehene Regel-und Steuereinrichtung 9 in Betracht, die mit innerhalb des Mähdreschers 2 angeordneter Sensorik in Verbindung steht und der Überwachung und Steuerung der Abläufe in dem Mähdrescher 2 dient. In diese Regel- und Steuereinrichtung 9 kann eine Prozedur integriert sein, welche mit dem Eintreten eines entsprechenden Betriebszustandes, wie beispielsweise in der Aufnahme- oder Ablageposition des Mähdreschers 2, aktivierbar ist. Die Aktivierung der Betätigungseinrichtung 8 erfolgt mit dem Erreichen einer Endposition der Aufnahmevorrichtung 3. Die aktivierte Betätigungseinrichtung 8 steuert eine Aktorik an, die das Raupenfahrwerk 7 automatisch in dessen äußere Endlage überführt. Um zu vermeiden, dass die Aktivierung der Betätigungseinrichtung 8 ungewollt durch das Anheben der Aufnahmevorrichtung 3 bis zum dem maximalen Abstand AB2 zum Boden ausgelöst wird, lässt sich diese Funktion bei Bedarf zu- oder abschalten, damit diese nur bei ausgesuchten Betriebszuständen zur Verfügung steht.

Ebenso kann eine manuelle Betätigung vorgesehen sein, indem die Betätigungseinrichtung 8 als ein Schalter an der Steuer- und Regeleinheit 9 oder als ein separater Zusatzschalter ausgeführt ist, der durch eine Bedienperson bei Bedarf betätigbar ist. Erst das Betätigen des Schalters beziehungsweise des Zusatzschalters bewirkt die Variation des Höhenniveaus.

### Bezugszeichenliste:

- 1: Erntemaschine
- 2: Mähdrescher
- 3: Aufnahmevorrichtung
- 4: Kabine
- 5: Vorderachse
- 6: Raupe
- 7: Raupenlaufwerk
- 8: Betätigungseinrichtung
- 9: Regel- und Steuereinrichtung
- 10: Hinterachse

- P: Pfeil
- AB1: erster vertikaler Abstand
- AB2: maximaler vertikaler Abstand
- H: zusätzlicher Abstand

## Patentansprüche

1. Selbstfahrende Erntemaschine (1) mit einer Aufnahmevorrichtung (3) für ein Vorsatzgerät sowie mit zumindest einem mit einem Dämpfungssystem versehenen Raupenlaufwerk (7), das von an einer Achse der Erntemaschine (1) und beidseitig an der Achse angeordneten Raupen (6) ausgebildet ist,
**dadurch gekennzeichnet,**
**dass** das Höhenniveau der Erntemaschine (1) durch eine Variation des Federweges des hydropneumatisch ausgeführten Dämpfungssystems des Raupenlaufwerkes (7) veränderbar ist.

2. Erntemaschine (1) nach Anspruch 1, **dadurch gekennzeichnet, dass** der Federweg der an der Achse angeordneten, hydropneumatisch gefederten Raupen (6) unabhängig voneinander veränderbar ist.

3. Erntemaschine (1) nach einem der Ansprüche 1 oder 2, **dadurch gekennzeichnet, dass** eine Sensorik sowie Regel- und Steuereinrichtung (8, 9) an der Erntemaschine (1) eine Neigung derselben in Bezug auf den Untergrund erfasst und in Abhängigkeit von der Neigung den Federweg der hydropneumatisch gefederten Raupen (6) durch eine Ansteuerung von Aktoren variiert.

4. Erntemaschine (1) nach einem der Ansprüche 1 bis 3, **dadurch gekennzeichnet, dass** das hydropneumatisch gefederte Raupenlaufwerk (7) in Abhängigkeit von einem Betriebszustand der Erntemaschine in eine äußere Endlage überführbar ist.

5. Erntemaschine (1) nach Anspruch 4, **dadurch gekennzeichnet, dass** in einem Betriebszustand, in dem sich die Erntemaschine (1) in einer Aufnahme- oder Ablageposition befindet, in der das Vorsatzgerät durch die Aufnahmevorrichtung (3) aufnehmbar oder ablegbar ist, das Raupenlaufwerk (7) in eine äußere Endlage überführt ist.

6. Erntemaschine (1) nach Anspruch 5, **dadurch gekennzeichnet, dass** ein Verfahren des Raupenlaufwerkes (7) in eine äußere Endlage durch eine an der Erntemaschine (1) angeordnete Betätigungseinrichtung (8) automatisch oder manuell initiierbar ist.

7. Erntemaschine (1) nach Anspruch 6, **dadurch gekennzeichnet, dass** durch die Betätigungseinrichtung (8) bei Erreichen einer Endposition der Aufnahmevorrichtung (3) das Raupenlaufwerk (7) automatisch in eine äußere Endlage überführbar ist.

8. Erntemaschine (1) nach Anspruch 6, **dadurch gekennzeichnet, dass** durch eine manuelle Betätigung der Betätigungseinrichtung (8) bei Erreichen einer Endposition der Aufnahmevorrichtung (3) das Raupenfahrwerk (7) in eine äußere Endlage überführbar ist.

## Claims

1. A self-propelled harvester (1) having a mounting device (3) for a front attachment and at least one crawler track assembly (7) which is provided with a damping system and which is formed by crawler tracks (6) which are arranged at an axle of the harvester (1) and at both sides on the axle,
**characterised in that**
the height level of the harvester (1) is variable by a variation in the spring travel of the hydropneumatically operated damping system of the crawler track assembly (7).

2. A harvester (1) according to claim 1 **characterised in that** the spring travel of the hydropneumatically sprung crawler tracks (6) arranged at the axle is variable independently of each other.

3. A harvester (1) according to one of claims 1 and 2 **characterised in that** a sensor means and a regulating and control device (9) on the harvester (1) detects an inclination thereof in relation to the supporting ground and in dependence on the inclination varies the spring travel of the hydropneumatically sprung crawler tracks (6) by actuation of actuators.

4. A harvester (1) according to one of claims 1 to 3 **characterised in that** the hydropneumatically sprung crawler track assembly (7) can be transferred into an outer end position in dependence on an operating condition of the harvester.

5. A harvester (1) according to claim 4 **characterised in that** the crawler track assembly (7) is transferred into an outer end position in an operating condition in which the harvester (1) is in a lifting or lowering position in which the front attachment can be lifted or lowered by the mounting device (3).

6. A harvester (1) according to claim 5 **characterised in that** a displacement of the crawler track assembly (7) into an outer end position can be initiated automatically or manually by an actuating device (8) arranged on the harvester (1).

7. A harvester (1) according to claim 6 **characterised in that** the crawler track assembly (7) can be automatically transferred into an outer end position by the actuating device when an end position of the mounting device (3) is reached.

8. A harvester (1) according to claim 6 **characterised in that** the crawler track assembly (7) can be transferred into an outer end position by manual actuation of the actuating device (8) when an end position of the mounting device (3) is reached.

## Revendications

1. Moissonneuse automotrice (1) comportant un dispositif de réception (3) pour un outil frontal ainsi qu'au moins un train de chenilles (7) pourvu d'un système d'amortissement et formé de chenilles (6) disposées sur un essieu de la moissonneuse (1) et de part et d'autre de l'essieu, **caractérisée en ce que** le niveau de hauteur de la moissonneuse (1) est modifiable par une variation du débattement du système d'amortissement hydropneumatique du train de chenilles (7).

2. Moissonneuse (1) selon la revendication 1, **caractérisée en ce que** les débattements des chenilles (6) à suspension hydropneumatique disposées sur l'essieu sont modifiables indépendamment l'un de l'autre.

3. Moissonneuse (1) selon l'une des revendications 1 ou 2, **caractérisée en ce que** des capteurs ainsi qu'un dispositif de régulation et de commande (8, 9) sur la moissonneuse (1) détectent une inclinaison de celle-ci par rapport au sol et font varier le débattement des chenilles (6) à suspension hydropneumatique en fonction de l'inclinaison par une commande d'actionneurs.

4. Moissonneuse (1) selon l'une des revendications 1 à 3, **caractérisée en ce que** le train de chenilles (7) à suspension hydropneumatique peut être transféré vers une position finale extérieure en fonction d'un état de fonctionnement de la moissonneuse.

5. Moissonneuse (1) selon la revendication 4, **caractérisée en ce que** le train de chenilles (7) est transféré vers une position finale extérieure dans un état de fonctionnement où la moissonneuse (1) se trouve dans une position de réception ou de dépose, dans laquelle l'outil frontal peut être reçu ou déposé par le dispositif de réception (3).

6. Moissonneuse (1) selon la revendication 5, **caractérisée en ce qu'**un déplacement du train de chenilles (7) vers une position finale extérieure peut être initié automatiquement ou manuellement par un dispositif d'actionnement (8) disposé sur la moissonneuse (1).

7. Moissonneuse (1) selon la revendication 6, **caractérisée en ce que** le train de chenilles (7) peut être transféré automatiquement vers une position finale extérieure par le dispositif d'actionnement (8) lorsque le dispositif de réception (3) atteint une position finale.

8. Moissonneuse (1) selon la revendication 6, **caractérisée en ce que** le train de chenilles (7) peut être transféré vers une position finale extérieure par un actionnement manuel du dispositif d'actionnement (8) lorsque le dispositif de réception (3) atteint une position finale.
